Europäisches Patentamt

European Patent Office

Office européen des brevets

(19)

(11) Numéro de publication: **0 191 655 B1**

(12) **FASCICULE DE BREVET EUROPEEN**

(45) Date de publication du fascicule du brevet:
05.04.89

(51) Int. Cl.⁴: **B29C 53/66**, F17C 1/16

(21) Numéro de dépôt: 86400019.5

(22) Date de dépôt: 07.01.86

(54) **Procédé de bobinage d'un récipient.**

(30) Priorité: 15.01.85 FR 8500515

(43) Date de publication de la demande:
20.08.86 Bulletin 86/34

(45) Mention de la délivrance du brevet:
05.04.89 Bulletin 89/14

(84) Etats contractants désignés:
DE GB IT

(56) Documents cités:
FR-A- 2 268 223
GB-A- 935 332
US-A- 3 655 085
US-A- 4 369 894

(73) Titulaire: COMMISSARIAT A L'ENERGIE ATOMIQUE,
31/33, rue de la Fédération, F-75015 Paris(FR)

(72) Inventeur: Barbalat, Claude, Les Pampres Bt B Les Ulis,
F-91400 Orsay(FR)
Inventeur: Denizet, Pascale, 155 Bld Brune,
F-75014 Paris(FR)

(74) Mandataire: Mongrédien, André et al, c/o
BREVATOME 25, rue de Ponthieu, F-75008 Paris(FR)

## Description

Les récipients composites sous pression renforcés de fibres ayant une résistance et une rigidité très élevée sont utilisés pour réaliser des structures légères telles que des réservoirs de propulseurs de fusées.

Ces réservoirs se composent d'une partie cylindrique et de deux fonds. Chaque fond comporte une ouverture appelée "ouverture polaire", destinée à une embase métallique qui la renforce et assure la liaison avec d'autres pièces telles qu'un bouchon allumeur à l'avant et une tuyère à l'arrière.

Après avoir été imprégnés de résine, les filaments sont mis en place autour d'un mandrin de manière à créer la structure finale de façon directe. Dans certaines applications, comme un réservoir de propulseur, le mandrin est extrait de la structure après une phase de polymérisation de la résine. Le mandrin est extrait par démontage, solubilisation ou fusion pour être remplacé par le propergol. L'ouverture polaire par laquelle le mandrin est extrait est généralement de grandes dimensions par rapport au diamètre de la structure (rapport 1/2 à 1/3).

Dans d'autres applications, comme par exemple une capacité de stockage de gaz, le mandrin est une vessie (ou liner) le plus souvent métallique et de faible épaisseur, faisant partie intégrante de la structure finale et qui assurent son étanchéité. Cette vessie possède deux embouts. L'un de ces embouts sert au passage des gaz. Les renforcements devant être effectifs sur toute la surface de la capacité, l'ouverture est alors faible.

On connaît déjà des procédés de bobinage utilisant deux types d'enroulement:

– le premier, dit "satellite", est constitué par une succession de boucles tangentes aux ouvertures polaires. Il renforce à la fois les fonds et la partie cylindrique,
– le second, dit "circonférentiel", est réalisé uniquement sur la partie cylindrique et les trajectoires des fibres sont caractérisées par un angle proche de 90° entre les fibres et la génératrice du cylindre. Cet enroulement complète le renfort de la partie cylindrique.

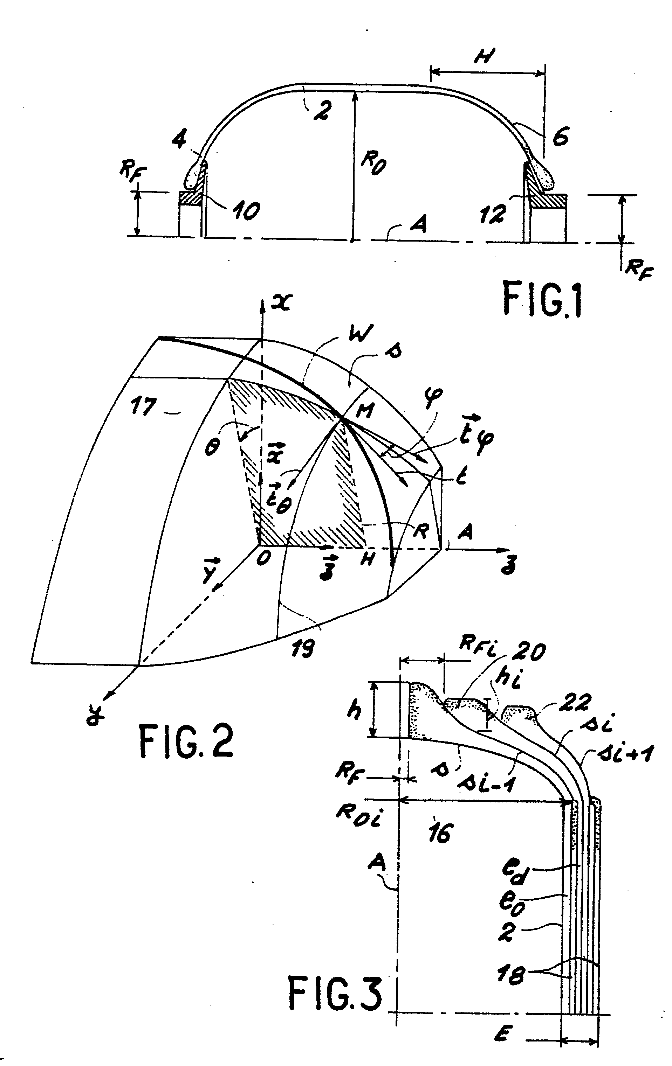

La figure 1 représente une vue en coupe d'un réservoir bobiné de propulseur à poudre. Il se compose d'une partie cylindrique 2, d'un fond avant 4 et d'un fond arrière 6. Le cylindre et les deux fonds sont réalisés par bobinage. Chaque fond comporte une ouverture polaire circulaire centrée sur l'axe A du réservoir. On désigne par $R_F$ le rayon de l'ouverture polaire.

A l'intérieur de chaque ouverture polaire est disposée une embase polaire, à savoir respectivement une embase polaire avant 10 et une embase polaire arrière 12. Les fonds 4 et 6, le cylindre 2, les embases avant et arrière 10, 12 présentent une symétrie de révolution autour de l'axe A.

On a représenté sur la figure 2 une vue schématique en perspective d'une partie d'un réservoir bobiné qui permet de définir quelques grandeurs qui interviendront ultérieurement. On a désigné le fil par la référence W, la surface moyenne d'un fond du réservoir par la lettre s, par la référence t le vecteur unitaire tangent au fil au point courant M, $t\varphi$, le vecteur unitaire tangent au méridien 17 au point courant M, $t\theta$, le vecteur unitaire tangent au parallèle 19 au point courant M, R la distance du point M à l'axe A du réservoir, $\varphi$ l'angle de bobinage entre les vecteurs t et $t\varphi$.

Le problème comporte ainsi deux fonctions inconnues. De ce fait, deux conditions faisant intervenir ces deux fonctions sont nécessaires. Ceci conduit à développer différentes méthodes de conception.

1) La conception dite isotensoïde sera fondée sur les deux conditions suivantes: les fils seuls équilibrent les efforts dus à la pression interne. La contrainte dans les fils est constante sur toute leur longueur.

La méridienne du fond et la loi de bobinage sont respectivement définies par les fonctions R et $\varphi$. Ces deux fonctions sont solutions du système différentiel constitué des équations suivantes:

$$2 + \frac{R'\,R''}{1 + R'^2} = tg\,2\varphi \quad \text{avec} \quad R' = \frac{dR}{dZ} \quad \text{et} \quad R'' = \frac{d^2R}{dZ^2}$$

$$\frac{R^2\sqrt{1 + R'^2}}{\cos\varphi} = K$$

La dérivation par rapport à z de l'équation conduit, après simplification, à:

$$2\ R' + R'\ \frac{R\ R''}{1 + R'^2} + R\ tg\ \varphi\ .\ \varphi' = 0$$

On en déduit :

$$2\ R' + R'\ (tg^2\varphi - 2) = Rtg\ \varphi' = 0$$

$$R'\ sin\ \varphi + R\ cos\ \varphi\ \varphi' = 0$$

ou finalement:

R(M) sin φ (M) = constante = $R_F$.

Cette relation entre l'angle de bobinage φ et le rayon local R est très simple et permet donc d'obtenir dans ce cas particulier la loi de bobinage lorsque le fond est défini géométriquement. Ainsi, le fait de concevoir un fond de réservoir tel que les fils seuls équilibrent les efforts dus à la pression interne en étant sollicités par une contrainte constante entraîne que ces fils sont déposés suivant des géodésiques de la surface moyenne du réservoir.

D'autre part, on obtient ainsi également l'équation définissant le profil optimisé suivant cette théorie:

$$z = -c \int_{R_0}^{R} \frac{r^3\ dr}{(r^2 - R_F^2 - c^2 r^6)^{1/2}}\ \ avec\ \ C = \sqrt{\frac{R_0^2 - R_F^2}{R_0^6}}$$

2) La conception à bobinage planaire équilibré est fondée d'une part sur le fait que la technique du bobinage planaire est utilisée, d'autre part sur le fait que la condition d'équilibrage des efforts dus à la pression interne par les fils seuls est vérifiée.

Un exemple est donné dans l'article de Hisao Fukunaga et Masuji Uemura, "Optimum design of helically wound composites pressure vessels", Composite Structures 1, 1983, 31–49.

<u>Appréciation de l'art antérieur</u>

Dans ces procédés de bobinage connus, la forme du fond est déterminée par le calcul. En d'autres termes, la forme du fond du réservoir est déterminée par un calcul d'optimisation de sa résistance. En conséquence, la forme du fond ne peut pas être choisie librement et en particulier, on ne peut pas réaliser un fond présentant un bombé faible. Ces méthodes conduisent à une forme de fond dans laquelle le rapport entre son rayon $R_0$ et sa hauteur H est de l'ordre de 1,5. Par suite, la longueur du récipient est augmentée.

D'autre part, ces procédés de bobinage conduisent à l'obtention d'un bourrelet de forte épaisseur en bordure des ouvertures polaires. En effet, les filaments satellites sont enroulés de manière à être tangents à l'ouverture polaire. Le nombre d'enroulements est le même pour n'importe quel parallèle. Or, l'ouverture polaire est le parallèle qui présente le plus petit diamètre. Donc, les fils se superposent davantage à cet endroit qu'à tout autre endroit du fond.

En particulier, dans le cas où l'on désire réaliser un fond présentant un bombé faible, c'est-à-dire tel que le rapport $R_0/H$ soit par exemple de l'ordre de 5, le rayon de courbure du raccordement du fond à la partie cylindrique du réservoir est petit. Des surcontraintes importantes sont créées à cet endroit lors d'une mise en pression interne du récipient. Pour assurer la tenue mécanique à une pression élevée, une forte épaisseur de composite est donc nécessaire.

Il est clair que si l'épaisseur bobinée au niveau du raccordement du fond à la partie cylindrique est importante, la hauteur <u>h</u> du bourrelet sera augmentée dans les mêmes proportions. Au niveau de l'ouverture polaire, le rapport h/$e_0$, <u>e</u> étant l'épaisseur bobinée au niveau du raccordement de la partie cylindrique au fond, varie dans le même sens que le rapport $R_F/R_0$, $R_F$ étant l'ouverture polaire et $R_0$, le rayon de la partie cylindrique, qui est également le diamètre maximum du fond (avoir figure 1).

A titre d'exemple, pour un récipient de rayon $R_0$ = 250 mm, le rayon d'ouverture polaire choisi est égal à 20 mm. Pour un fond présentant un bombé faible tel que le rapport R/H soit de l'ordre de 5, et pour une

épaisseur $e_0$ de 10 mm, le rapport $h/e_0$ est de l'ordre de 10. Cela conduit à une hauteur h de 100 mm qui n'est pas admissible. En effet, il convient de limiter la hauteur maximale $\underline{h}$ du bourrelet pour assurer la stabilité des fibres avant la polymérisation, et pour éviter les déformations du parcours géodésique initialement calculé pour le profil du fond. La limite de $\underline{h}$ généralement admise pour le type de réservoir pris en exemple est d'environ 30 mm, ce qui conduit en partie cylindrique à une épaisseur maximale de 3 mm. Une telle épaisseur ne permet pas d'assurer une résistance suffisante au niveau du raccordement. Cette solution n'est donc pas admissible.

On connaît également, par le document FR-A 2 268 223, ayant servi e base pour le préambule de la revendication 1, un procédé de fabrication d'un réservoir pour fluides sous haute pression. Le récipient comporte une partie cylindrique et deux parties en dôme bombées à chacune des extrémités de la partie cylindrique. On enroule les filaments autour du récipient dans la direction polaire de manière à constituer un premier puis un second revêtement polaire. Toutefois, les problèmes liés à l'apparition d'un bourrelet de forte épaisseur ne sond pas abordés parce que les parties bombées sont munies de bossages centraux sur lesquels les boucles des couches satellites peuvent se former sans créer de bourrelet de forte épaisseur. Par ailleurs, la deuxième couche de bobinage satellite n'est pas en retrait par rapport à la première.

On connaît enfin (US-A 4 369 894) un procédé pour réaliser un récipient sphérique renforcé de couches bobinées dont les angles de bobinages vont en augmentant à partir de l'ouverture polaire. Toutefois, ce procédé ne peut s'appliquer qu'à un récipient sphérique et non à un récipient de forme cylindrique allongée.

### Objet de l'invention

Le procédé de la présente invention a donc pour but de proposer un procédé de bobinage dans lequel la hauteur $\underline{h}$ du bourrelet formé au niveau de l'ouverture polaire d'un réservoir bobiné est aussi faible que possible.

De manière plus précise, le procédé de bobinage de l'invention d'un récipient axisymétrique résistant à la pression comporte les caractéristiques énoncées dans la revendication 1.

La différence entre le diamètre de l'ouverture polaire et le diamètre du parallèle auquel les boucles de la deuxième couche sont tangentes est choisie de manière que la hauteur du bourrelet de la seconde couche ne dépasse pas une valeur limite que l'on se fixera suivant la méthode décrite plus loin. On bobine ensuite une troisième couche, et ainsi de suite jusqu'à ce que la somme des épaisseurs bobinées atteigne l'épaisseur voulue, c'est-à-dire dans l'exemple choisi 10 mm au niveau du raccordement entre le fond et la partie cylindrique du récipient.

De préférence, on bobine n couches satellites successives d'épaisseur $e_i$ par n enroulements de filaments, chacune selon une succession de boucles tangentes respectivement à des cercles de rayon $R_1$, $R_2$,... $R_n$, chaque couche formant un bourrelet, le rayon $R_i$ étant plus grand que le rayon du bourrelet de la couche i−1 de manière que le bourrelet de la couche i soit décalé en retrait par rapport au bourrelet de la couche i−1 et ne le chevauche pas, les épaisseurs $e_i$ et le nombre de couches étant combinés de manière à obtenir une épaisseur bobinée voulue.

Ce procédé s'applique particulièrement au cas où l'on désire fabriquer un récipient dans lequel les fonds présentent un bombé faible, mais il s'applique également au cas d'un récipient dans lequel le rapport $R_0/H$ est plus important, de l'ordre de 1,5.

Entre deux couches successives de bobinage satellite, on peut intercaler des couches de bobinage circonférentielles qui renforcent uniquement la partie cylindrique du réservoir.

D'autres développements avantageux du procédé de bobinage selon la présente invention font l'objet des revendications dépendantes.

D'autres particularités et avantages de l'invention apparaîtront encore à la lecture de la description qui suit d'un exemple de réalisation donné à titre illustratif, en référence aux figures annexées, sur lesquelles:

— la figure 1, déjà décrite, représente une vue en coupe par un plan méridien d'un réservoir bobiné de propulseur à poudre,

— la figure 2, déjà décrite, est une vue schématique en perspective qui illustre la manière de déposer les fils sur les fonds,

— la figure 3 est une vue schématique en coupe par un plan méridien d'un réservoir bobiné qui illustre le procédé de l'invention,

— la figure 4 est un schéma qui illustre la manière de déterminer l'épaisseur d'une couche satellite,

— les figures 5 et 6 sont des schémas qui illustrent la méthode utilisée pour déterminer l'épaisseur bobinée au point courant M dans le cas où le rayon local du point courant est plus petit que le rayon polaire de la couche $\underline{i}$ augmenté de $T \cos \psi$ (figure 5) et dans le cas où le rayon local est plus grand que cette valeur (figure 6),

— la figure 7 est un schéma qui illustre la méthode utilisée pour déterminer le profil de la couche bobinée $\underline{i}$ à partir de l'épaisseur de bobinage réalisé,

– la figure 8 est une vue schématique en coupe qui illustre le procédé de bobinage de l'invention.

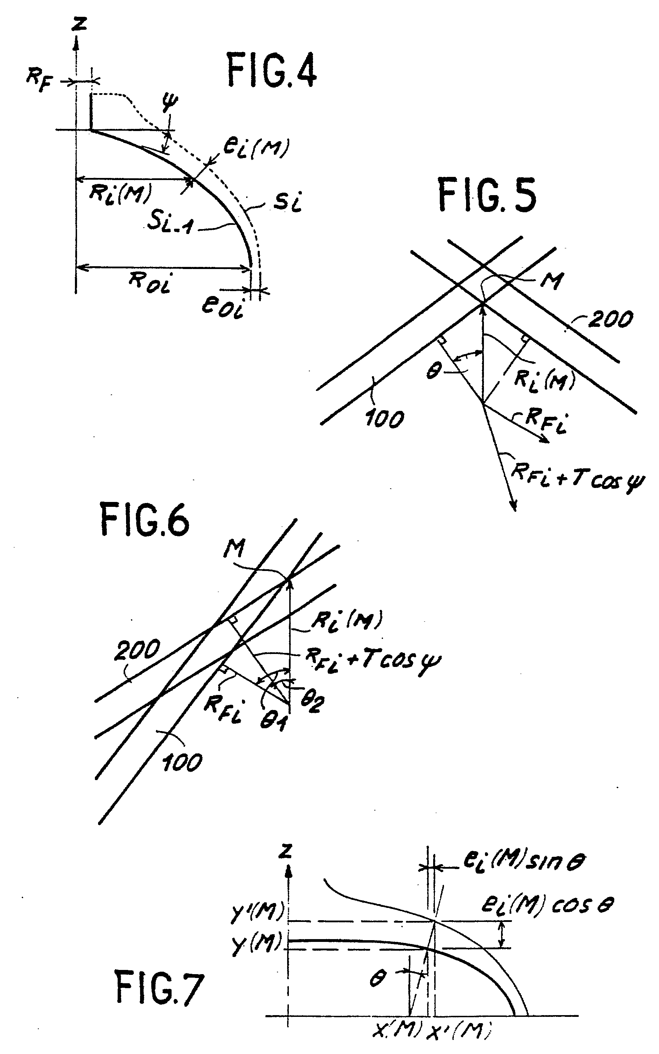

On a représenté sur la figure 3 une vue schématique en coupe passant par un plan méridien d'un réservoir bobiné qui illustre le procédé de l'invention. Le réservoir est axisymétrique d'axe A. Il comporte une partie cylindrique 2, et deux fonds dont un seul a été représenté. On a désigné par la lettre s la surface du fond. Conformément à l'invention, on a tout d'abord bobiné sur la partie cylindrique 2 et sur les fonds une première couche satellite tangente aux ouvertures polaires de rayons $R_F$ de chacun des deux fonds. Pour les raisons expliquées précédemment, cette couche bobinée forme un bourrelet 16 de hauteur h au voisinage de l'ouverture polaire. La hauteur h est égale à la hauteur maximale admissible pour ce bourrelet. On a désigné par la lettre $e_O$ l'épaisseur de la couche satellite en partie cylindrique.

Les filaments sont constitués de fibres de très faible diamètre (8 à 10 microns) noyées dans une matrice, le plus souvent en résine époxy. Le rôle de la matrice est de maintenir les filaments en place, de les protéger contre l'abrasion et les agressions chimiques, de contribuer à une bonne répartition des efforts entre les filaments, et surtout de fournir la résistance au cisaillement interlaminaire du composite.

Les fibres couramment utilisées sont les verres E, R ou S, le Kevlar 49® et les carbones haute résistance (HR). Les résines époxy sont grossièrement de deux types: l'un à faible module à l'origine et grand allongement à la rupture, possédant une température de gélification faible (40°C), l'autre à plus fort module et allongement faible, possédant une température de gélification plus élevée (supérieure à 100°C). Dans tous les cas, le module de la résine est nettement plus faible que celui de la fibre. Dans certaines théories ceci justifie l'hypothèse selon laquelle le fil est seul à travailler, c'est-à-dire à assurer une résistance aux efforts subis.

Après avoir bobiné cette première couche, on a bobiné une couche circonférentielle sur la partie cylindrique uniquement. Cette couche est obtenue de manière classique par un enroulement de fils en spirale, présentant un angle de bobinage d'environ 90° par rapport à l'axe A du réservoir. Cette couche circonférentielle présente une épaisseur 18.

Par dessus la couche circonférentielle, on a bobiné une deuxième couche satellite de manière à ce que le fil W soit tangent à un cercle parallèle de rayon $R_{Fi}$ supérieur au rayon $R_F$ de l'ouverture polaire du réservoir. La hauteur $h_i$ du bourrelet 20 de la seconde couche satellite est choisie de manière que l'épaisseur maximale des deux couches ainsi superposées demeure dans les limites de la hauteur h admissible. En partie cylindrique 2, la couche satellite i présente une épaisseur $e_{0i}$.

On a désigné par $s_{i-1}$ la surface extérieure de la première couche bobinée sur laquelle la couche satellite i s'applique.

Par dessus cette couche satellite i, on a bobiné une seconde couche circonférentielle de caractéristique identique à la première couche circonférentielle décrite précédemment, c'est-à-dire en particulier, de même épaisseur 18.

Par dessus la seconde couche circonférentielle, on a bobiné une troisième couche satellite dont les boucles sont tangentes à un cercle parallèle de rayon $R_{Fi+1}$ dont le rayon est supérieur à $R_{Fi}$. La hauteur $h_{i+1}$ du bourrelet 22 ne dépasse pas la hauteur fixée.

Une ième couche satellite est définie par son épaisseur en partie cylindrique $e_{0i}$. La valeur maximale de cette épaisseur dépend de la valeur h. Elle est fixée également en fonction du nombre N de couches choisi et de la valeur E à respecter, en tenant compte de l'existence de couches circonférentielles intercalées, d'épaisseur 18.

On a désigné par la lettre E l'épaisseur totale bobinée en partie cylindrique. Il va de soi que les épaisseurs des couches satellites et des couches circonférentielles s'ajoutent. L'épaisseur E est déterminée par la résistance du récipient que l'on souhaite obtenir. Plus cette résistance est élevée, plus l'épaisseur E doit être importante. Une couche satellite est encore définie par la connaissance, en tous points courants M d'un parallèle 19, de l'angle $\varphi$ (M) entre la fibre W bobinée et le vecteur unitaire $t\varphi$ tangent au méridien. Il suit une loi géodésique correspondant aux lignes de glissement minimum de la fibre W. Il dépend de l'ouverture polaire $R_{Fi}$, du profil de la surface $s_{i-1}$. Pour la première couche, cette surface est constituée par le fond s du réservoir. Pour les couches suivantes, cette surface est le profil bobiné de la couche précédente. La détermination de ces paramètres se fait en quatre étapes.

Tout d'abord, on calcule le profil bobiné de la couche n° i-1. On suppose connue la géométrie axisymétrique de la surface $s_{i-1}$ sur laquelle on bobine, le rayon d'ouverture polaire $R_{Fi}$, l'épaisseur $e_i$ à la jonction du fond et du cylindre, l'angle de bobinage $\varphi_i(M)$ entre la fibre W et le vecteur $t\varphi$ tangent à la méridienne 17 en chaque point de la surface $s_{i-1}$ On veut déterminer la géométrie de la surface $s_i$.

### Détermination des épaisseurs

La méthode pour déterminer l'épaisseur $e_i(M)$ de la couche satellite i au point M, illustrée par le schéma de la figure 4, est différente selon que ledit point M se trouve aux environs de la jonction du fond et de la partie cylindrique ou aux environs de l'ouverture polaire.

Aux environs de la jonction du fond et de la partie cylindrique, tous les fils W qui coupent le parallèle à la jonction du fond et de la partie cylindrique coupent aussi le parallèle au point courant M considéré. Or, à la jonction du fond et de la partie cylindrique, on a:

$2\pi\, R_{0i}\, e_{0i} = N_O\, S/\cos \varphi_{0i}$.

D'autre part, au point courant M, on a:

$2\pi\, R_i\,(M)\, e_i\,(M) = N_0\, s/\cos \varphi_i\,(M)$.

Dans ces formules, $N_0$ représente le nombre de fois où le parallèle est coupé par une mèche et S, la section normale d'une mèche. On en déduit donc que:

$$e_i(M) = \frac{R_{oi}\, e_{oi} \cdot \cos \psi_{oi}}{R_i(M) \cdot \cos \psi_i(M)}$$

Cette relation n'est plus valable lorsque le point courant M se rapproche de l'ouverture polaire où $\varphi_i(M)$ tend vers 90°. Si l'on utilisait cette formule, le résultat du calcul donnerait une épaisseur infinie. Aux environs de l'ouverture polaire, l'évaluation de l'épaisseur se fait donc en dénombrant le nombre de mèches qui passent par le parallèle de rayon $R_i(M)$.

Soit T la largeur de mèche. Deux cas se présentent:

— $R_{Fi} \leqq R_i(M) \leqq R_{Fi} + T \cos \psi$, (figure 5)
— $R_{Fi} + T \cos \psi \leqq R_i(M)$ (figure 6).

Dans le cas où $R_{Fi} \leqq R_i(M) \leqq R_{Fi}(M) + T \cos \psi$, les mèches passant par le point M sont celles qui sont comprises entre les mèches 100 et 200.

Or, $2\theta = 2\,\mathrm{arcos}\,(R_{Fi}/R_i(M))$, le nombre de ces nappes est donc:

$$N_i(M) = \frac{N_0}{2}\, \frac{2\,\mathrm{arcos}\,(R_{Fi}/R_i(M))}{2\pi}$$

soit t l'épaisseur d'une mèche: on obtient alors:

$$e_i(M) = \frac{N_0 t}{2\pi}\, \mathrm{Arcos}\,(R_{Fi}/R_i(M)).$$

Si l'on se réfère à l'épaisseur des mèches à la jonction fond-cylindre, on a:

$2\pi\, R_{0i}\, e_{0i} = N_0\, t\, T/\cos \varphi_{0i}$,

on peut donc écrire:

$$e_i(M) = \frac{R_{oi}\, e_{oi}\, \cos \psi_{oi}}{T}\, \mathrm{Arcos}\,(R_{Fi}/R_i(M)).$$

$$\mathrm{Dans\ le\ cas\ où}\ R_i(M) \geqslant R_{Fi}(M) + T \cos \psi,$$

$$-\ \theta_1 = \mathrm{Arcos}\,(R_{Fi}/R_i(M))$$

$$-\ \theta_2 = \mathrm{Arcos}\,\left(\frac{R_{Fi} + T \cos \psi}{R_i(M)}\right)$$

Les mèches passant par le point M sont celles qui sont comprises entre les mèches 100 et 200. Leur nombre est:

$$N_i(M) = \frac{N_0}{2\pi} \left[ \text{Arcos}\left(\frac{R_{Fi}}{R_i(M)}\right) \quad \text{Arcos}\left(\frac{R_{Fi} + T\cos\psi}{R_i(M)}\right) \right]$$

L'épaisseur correspondante vaut :

$$e_i(M) = \frac{R_{oi}\, e_{oi}\cos\varphi_{oi}}{T} \left[ \text{Arcos}\,\frac{R_{Fi}}{R_i(M)} \quad \text{Arcos}\,\frac{R_{Fi} + T\cos\psi}{R_i(M)} \right.$$

### Détermination du profil bobiné (figure 7)

Connaissant en chaque point de la figure $s_{i-1}$, l'épaisseur de bobinage réalisé, il suffit d'ajouter cette épaisseur normale projetée aux coordonnées du point considéré pour obtenir un point du profil cherché.

Le calcul du profil bobiné de la couche n° $i-1$ ayant été effectué, on choisit l'ouverture polaire $R_{Fi}$.

On détermine les angles de bobinage suivant la loi géodésique:

$R_i(M).\sin\varphi_i(M) = R_{Fi}$.

Le calcul et le tracé des trajectoires correspondantes sont effectués par un programme Fortran. Le principe de ce calcul est donné en particulier dans l'article de John T. Mofeditz: "Structural design considerations for fiber glass pressure vessels" présenté au 18th annual meeting of the renforced plastics division, CHICAGO (Illinois). Ce calcul permet notamment de donner l'angle $\varphi_{oi}$ de bobinage en partie cylindrique, et le déphasage D de la fibre lors de son passage sur le fond. On appelle angle de déphasage D un angle dont le centre se trouve sur l'axe A, situé dans un plan perpendiculaire à cet axe A au niveau de la jonction entre le fond et la partie cylindrique, et sous lequel est vue la fibre à son entrée et à sa sortie de la partie cylindrique.

Une épaisseur de bobinage $e_{0i}$ est choisie et l'on vérifie, comme indiqué précédemment, qu'elle n'entraîne pas une hauteur $h_i$ de bourrelet trop élevée.

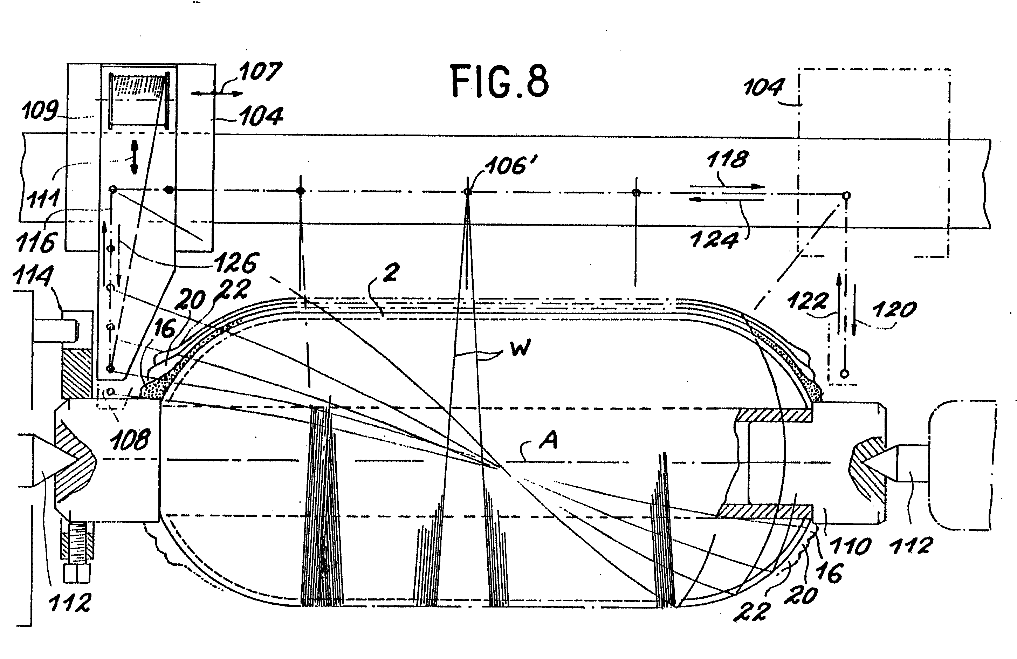

On a illustré le procédé de bobinage sur la figure 8. La machine à bobiner de type BAER WSC 65/500 ou de type Manurhin ER 750 MP comprend un chariot 104 qui peut se déplacer en translation parallèlement à l'axe A (flèche 107). Le chariot supporte un bras 106 terminé par un oeilleton 108. La fibre M est dévidée à partir d'une bobine 109, et traverse l'oeilleton 108. Cette fibre est soumise à une tension que l'on fait varier selon la couche déposée. Cette tension F est fonction de l'angle de mèche $\varphi_0$ et de la tension maximale $T_M$ exercée lors d'un bobinage circonférentiel. Les trois grandeurs sont liées par la relation:

$$F = \frac{F_M}{\sin\varphi_0}$$

Le bras se déplace en translation par rapport au chariot 104, comme schématisé par la flèche 111.

Un mandrin 110 monté entre deux pointes 112, supporte la structure à bobiner. Cette structure est entraînée en rotation par un axe 114.

La translation du bras plongeant, le mouvement de translation du chariot et celui du bras sont perpendiculaires entre eux et commandent les déplacements du système de distribution de la fibre dans un plan comprenant l'axe de rotation.

Ces mouvements sont régis par l'intermédiaire d'une commande numérique autorisant tous les types d'enroulements: hélicoïdal, polaire, circonférentiel.

Les mouvements sont programmés de manière à respecter les grandeurs calculées: angles, ouvertures polaires, épaisseurs.

Pour chaque ensemble de trajectoires satellites, un programme de dépôt est mis au point. Les mouvements sont calculés pour une seule trajectoire correspondant à un aller et retour du chariot et répétés le nombre de fois nécessaires pour recouvrir la vessie.

Les déplacements se décomposent généralement de la manière suivante:

– origine: l'oeilleton se trouve à proximité de l'axe A à une extrémité du réservoir,

– déplacement du bras de bobinage perpendiculairement à l'axe en s'éloignant de celui-ci d'une distance supérieure au rayon du cylindre (116),

– déplacement du chariot, parallèlement à l'axe, associé à une rotation de la pièce pour former l'angle de la fibre sur la partie cylindrique (118),

– déplacement perpendiculairement à l'axe en direction de celui-ci à l'autre extrémité du réservoir (120),

– rotation du mandrin de manière à respecter l'ouverture polaire,

– retour de l'oeilleton à l'origine par le même chemin comportant les mêmes rotations (122, 124, 126).

Pour le dépôt des fibres circonférentielles, le mandrin est animé d'une rotation constante tandis que le chariot se déplace à faible vitesse: on forme ainsi une hélice dans laquelle les fibres sont jointives.

## Revendications

1. Procédé de bobinage d'un récipient axisymétrique présentant un axe A, résistant à la pression, ce récipient se composant d'une partie cylindrique (2) et de deux fonds bombés (4, 6) de hauteur H, chaque fond (4, 6) comportant une ouverture polaire circulaire de rayon $R_F$ centrée sur l'axe A du récipient, procédé dans lequel on bobine une première couche d'un filament W par un enroulement dudit filament selon une succession de boucles tangentes aux ouvertures polaires ($R_F$) des deux fonds (4, 6), puis au moins une seconde couche d'un filament W par un enroulement dudit filament selon une succession de boucles, caractérisé en ce que lesdites boucles tangentes aux ouvertures polaires des deux fonds de ladite première couche d'un filament W forment un premier bourrelet, en ce que ladite au moins une seconde couche de filament W est bobinée selon une succession de boucles tangentes à un cercle de rayon R supérieur à $R_F$, et formant un second bourrelet de manière que le second bourrelet (18) formé par cette deuxième couche de bobinage satellite soit décalé en retrait par rapport au bourrelet (16) de la première couche satellite et ne le chevauche pas.

2. Procédé de bobinage selon la revendication 1, dans lequel on intercale une couche circonférentielle (18) entre deux couches satellites successives.

3. Procédé de bobinage selon l'une des revendications 1 ou 2, dans lequel le fond du récipient (4, 6) est faiblement bombé, le rapport entre le rayon $R_{0i}$ du fond et la hauteur H de ce fond étant de l'ordre de 5.

4. Procédé de bobinage selon l'une quelconque des revendications 1 à 3, caractérisé en ce que la hauteur maximale du dépôt sur le fond est limitée et peu différente de l'épaisseur de la couche bobinée au niveau du raccord du fond (4, 6) avec la partie cylindrique (2).

5. Procédé selon la revendication 1, caractérisé en ce que l'on bobine n couches satellites successives d'épaisseur $e_i$ par n enroulements de filaments, chacune selon une succession de boucles tangentes respectivement à des cercles de rayon ($R_1$, $R_2$, ..., $R_n$), chaque couche formant un bourrelet, le rayon $R_i$ étant plus grand que le rayon du bourrelet de la couche i–1 de manière que le bourrelet de la couche i soit décalé en retrait par rapport au bourrelet de la couche i–1 et ne la chevauche pas, les épaisseurs $e_i$ et le nombre de couches étant combinés de manière à obtenir une épaisseur bobinée voulue..

## Patentansprüche

1. Verfahren zum Aufspulen eines achssymmetrischen Behälters, der eine Achse A hat, druckfest ist und aus einem zylindrischen Abschnitt (2) und zwei gewölbten Böden (4, 6) der Höhe H besteht, wobei jeder Boden (4, 6) eine polarzirkulare Öffnung von Radius $R_F$ hat, die auf die Achse A des Behälters zentriert ist, wobei man eine erste Schicht eines Filaments W durch Aufwickeln des Filaments in einer Folge von Windungen tangential zu den Polaröffnungen ($R_F$) der zwei Böden (4, 6) aufspult und dann wenigstens eine Schicht eines Filaments W durch Aufwickeln des Filaments in einer Folge von Windungen aufspult, dadurch gekennzeichnet, daß die genannten, zu den Polaröffnungen der zwei Böden tangentialen Windungen der genannten ersten Filamentschicht W eine erste Zentrierwulst bilden und daß die genannte wenigstens eine zweite Filamentschicht W in einer Folge von Windungen aufgespult wird, die tangential zu einem Kreis des Radius R sind, der größer als $R_F$ ist und eine zweite Zentrierwulst bilden derart, daß die zweite Zentrierwulst (18), die durch diese zweite Satellitenaufspulschicht gebildet ist, nach hinten gegenüber der Zentrierwulst (16) der ersten Satellitenschicht versetzt ist und diese nicht überlappt.

2. Aufwickelverfahren nach Anspruch 1, bei dem man eine Umfangsschicht (18) zwischen die aufeinanderfolgenden Satellitenschichten einfügt.

3. Aufwickelverfahren nach einem der Ansprüche 1 oder 2, bei dem der Behälterboden (4, 6) leicht gewölbt ist, wobei das Verhältnis des Radius $R_{01}$ des Bodens zur Höhe H dieses Bodens in der Größenordnung von 5 liegt.

4. Aufwickelverfahren nach einem der Ansprüche 1 bis 3, dadurch gekennzeichnet, daß die Maximalhöhe der Ablage auf dem Boden begrenzt ist und wenig unterschiedlich zur Dicke der Wickelschicht in Höhe der Verbindung des Bodens (4, 6) mit dem zylindrischen Abschnitt (2) ist.

5. Verfahren nach Anspruch 1, dadurch gekennzeichnet, daß man n aufeinanderfolgende Satellitenschichten der Dicke $e_i$ durch n Filamentwindungen aufwickelt, jede gemäß einer Folge von Windungen, die jeweils tangential zu Kreisen der Radien ($R_1$, $R_2$, ..., $R_n$), wobei jede Schicht eine Zentrierwulst bildet, wobei der Radius $R_i$ größer als der Radius der Zentrierwulst der Schicht i–1 ist, damit die Zentrierwulst der Schicht i nach hinten gegenüber der Zentrierwulst der Schicht i–1 versetzt ist und diese nicht über-

deckt, wobei die Dicken $e_i$ und die Anzahl der Schichten derart kombiniert sind, daß man eine gewünschte Aufwickeldicke erhält.

## Claims

1. Method of winding an axisymmetric receptacle having a pressure-resistant axis A, the receptacle comprising a cylindrical portion (2) and two convex ends (4, 6) of height H, each end (4, 6) being formed with a circular polar aperture of a radius $R_F$ centred on the receptacle axis A characterized in that a first layer of a filament (W) is produced by winding the filament in a succession of loops tangential to the polar apertures ($R_F$) of the two ends (4, 6), then at least one second layer of a filament (W) by a winding of said filament in accordance with a succession of loops, characterized in that said loops tangential to the polar apertures of the two ends of the first layer of a filament (W) form a first bead, in that said at least one filament layer (W) is wound in accordance with a succession of loops tangential to a circle of radius (R) greater than ($R_F$) and forming a second bead in such a way that the second bead (18) formed by said second satellite winding layer is set back with respect to the bead (16) of the first satellite layer and no overlapping occurs.

2. Winding method according to claim 1, wherein a circumferential layer (18) is interpolated between two successive satellite layers.

3. Winding method according to either of the claims 1 and 2, wherein the end of the receptacle (4, 6) is slightly convex, the relation between the radius ($R_{0i}$) of th end and the height (H) thereof being of the order of 5.

4. Winding method according to any one of the claims 1 to 3, characterized in that the maximum height of the deposit on the end is limited, and not very different from the thickness of the wound layer at the connection between the end (4, 6) and the cylindrical portion (2).

5. Method according to claim 1, characterized in that
n successive satellite layers of a given thickness ($e_i$) are produced by the same number of windings of filaments, each layer in a succession of loops tangential to circles ($R_l$, $R_2$, ..., $R_n$) of different radii, each layer forming a bead, the radius $R_i$ being larger than the radius of the bead of the layers i–l, so that the bead of layer i is set back in relation to layer i–1, which it does not overlap, the thicknesses ($e_i$) and number of layers being so combined as to obtain a required wound thickness.

FIG.1

FIG.2

FIG.3

**FIG.4**

**FIG.5**

**FIG.6**

**FIG.7**

# FIG.8

EP 0 191 655 B1